# EUROPEAN PATENT APPLICATION

(11) **EP 4 653 814 A1**
(43) Date of publication of application: **26.11.2025**
(21) Application number: 25177338.8
(22) Date of filing: 19.05.2025
(51) Int. Cl.: G01C 21/16, G01C 21/20, G08G 1/16

(54) **LOCATION ESTIMATION SYSTEMS AND METHODS FOR A MATERIAL HANDLING VEHICLE**

(30) Priority: 20.05.2024 US 202463649812 P
(71) Applicant: The Raymond Corporation, Greene, NY 13778 (US)
(72) Inventor: KETCHUM, Robert J., El Granada, CA (US); WEISS, Joseph A., Greene, NY (US); HAMLIN, Jonathan W., Champaign, IL (US)
(74) Representative: Zacco Sweden AB

(57) **Abstract**

Systems (110) and methods (300) of tracking a material handling vehicle (105) include estimating a location of the material handling vehicle (105) based on modeled location data (220) from a first sensor (115) configured to model an odometry of the vehicle (105), measuring the location of the material handling vehicle (105) based on measured location data (210) from a second sensor (130) configured to measure a relative motion of the vehicle (105), determining an amount of noise (215, 225) in both the modeled location data (220) from the first sensor (115) and the measured location data (210) from the second sensor (130), and updating the estimated location of the material handling vehicle (105) based on the location data from the first sensor (115), the second sensor (130), and the amount of noise (215, 225).

## Description

### CROSS-REFERENCE TO RELATED APPLICATIONS

This application claims the benefit of U.S. Provisional Application No. 63/649,812, filed May 20, 2024, which is hereby incorporated by reference in its entirety.

### BACKGROUND

To facilitate integration with warehouse management systems, it may be beneficial to track (e.g., estimate) the current or predicted location of material handling vehicles within a warehouse or other work environment.

### SUMMARY

According to one aspect of the present disclosure, a method of tracking a material handling vehicle can include estimating a location of the material handling vehicle based on modeled location data from a first sensor configured to model the odometry of the vehicle. The method can include measuring the location of the material handling vehicle based on measured location data from a second sensor configured to measure a relative motion of the vehicle. The method can include determining an amount of noise in both the modeled location data from the first sensor and the measured location data from the second sensor. The method can include updating the estimated location of the material handling vehicle based on the location data from the first sensor, the second sensor, and the amount of noise.

In some examples, the modeled location data can be based on odometry data of the material handling vehicle.

In some examples, the measured location data can be based on inertial measurement unit data of the material handling vehicle.

In some examples, updating the estimated location of the material handling vehicle can include combining the modeled location data from the first sensor and the measured location data from the second sensor within a Kalman filter.

**In** some examples, the method can include using the updated estimated location of the material handling vehicle to track the location of objects outside a field of view of a visual sensor of the material handling vehicle.

In some examples, the method can include creating a buffer zone around the tracked objects to prevent the material handling vehicle from contacting the tracked objects.

**In** some examples, the method can include adjusting at least one operational parameter of the material handling vehicle based on the estimated location of the material handling vehicle.

**In** some examples, the operational parameter can include at least one of a maximum speed, a maximum lift height, or a maximum acceleration.

According to another aspect of the present disclosure, a guidance, navigation, and control system for a material handling vehicle can include a first sensor, the first sensor to measure odometry data. The system can include a second sensor, the second sensor to measure inertial measurement unit data. The system can include a processor, the processor to predict a location of the material handling vehicle based on the odometry data from the first sensor, measure the location of the material handling vehicle based on the inertial measurement unit data from the second sensor, and combine the odometry data from the first sensor and the inertial measurement unit data from the second sensor within a Kalman filter to generate an updated location estimate for the material handling vehicle.

In some examples, the processor can calculate an amount of noise in both the measured odometry data and the measured inertial measurement unit data.

In some examples, the updated location estimate for the material handling vehicle can be based on the odometry data from the first sensor, the inertial measurement unit data from the second sensor, and the noise in both the measured odometry data and the measured inertial measurement unit data.

In some examples, the system can include a feature tracking system configured to track locations of objects outside a field of view of a sensor based on the updated location estimate of the material handling vehicle.

In some examples, the feature tracking system can be configured to create a buffer zone around tracked objects to account for potential offsets in the updated location estimate.

In some examples, the system can include an absolute position measurement system configured to determine an absolute position of the material handling vehicle within a warehouse based on the updated location estimate.

In some examples, the processor can be further configured to adjust operational parameters of the material handling vehicle based on the updated location estimate, wherein the operational parameters can include at least one of maximum speed, lift height, or turning radius.

In some examples, the processor can be further configured to communicate the updated location estimate to a warehouse management system to facilitate tracking of the material handling vehicle throughout a warehouse.

According to yet another aspect of the present disclosure, a method of using a guidance, navigation, and control system for a material handling vehicle to track objects can include estimating a location of the material handling vehicle using a Kalman filter to combine measured location data from a first sensor and modeled location data from a second sensor. The method can include detecting an object within a field of view of a third sensor on the material handling vehicle. The method can include recording a position of the detected object relative to the estimated location of the material handling vehicle. The method can include updating an estimated location of the detected object based on subsequent estimated locations of the material handling vehicle, even when the object is no longer within the field of view of the sensor.

In some examples, the method can include communicating the estimated location of the detected object to a warehouse management system to facilitate tracking of obstacles within a warehouse environment.

In some examples, the method can include creating a buffer zone around the estimated location of the object and preventing the material handling vehicle from entering the buffer zone.

In some examples, a size of the buffer zone can be increased over time to account for potential offsets in the estimated location of the material handling vehicle.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a diagrammatic view of a material handling vehicle according to aspects of the present disclosure.
FIG. 2 is a diagrammatic view of a guidance, navigation, and control system of the material handling vehicle of FIG. 1 according to aspects of the present disclosure.
FIG. 3 is a flowchart of a location estimation method of the guidance, navigation, and control system of FIG. 2 according to aspects of the present disclosure.
FIG. 4 is a diagrammatic view of another example of a guidance, navigation, and control system of the material handling vehicle of FIG. 1 according to aspects of the present disclosure.
FIG. 5 is a diagrammatic view of an example feature tracking system of the material handling vehicle of FIG. 1 according to aspects of the present disclosure.

### DETAILED DESCRIPTION

The following discussion is presented to enable a person skilled in the art to make and use embodiments of the invention. Given the benefit of this disclosure, various modifications to the illustrated embodiments will be readily apparent to those skilled in the art, and the principles herein can be applied to other embodiments and applications without departing from embodiments of the invention. Thus, embodiments of the invention are not intended to be limited to embodiments shown but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

It is also to be appreciated that material handling vehicles are designed in a variety of classes and configurations to perform a variety of tasks. It will be apparent to those of skill in the art that the present disclosure is not limited to any specific material handling vehicle, and can also be provided with various other types of material handling vehicle classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

It should be noted that the various material handling vehicles listed above may perform a variety of load handling functions. For example, the material handling vehicles and/or the load handling portion (e.g., forks, mast, and/or fork carriage, etc.) of the material handling vehicles may be operated to move the forks up and down, tilt, reach (e.g., move the forks in and out), rotate, travel (e.g., move the material handling vehicle), and/or any combination thereof to complete a load handling function.

As should be noted, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

In one example, a guidance, navigation, and control system for a material handling vehicle may be configured to receive data from one or more sensors (e.g., one or more sensors located on the material handling vehicle) and output an estimation of the location (e.g., a predicted future location, current location, etc.) of the material handling vehicle. For example, the sensors may include sensors to monitor odometry data of the material handling vehicle, such as rotational encoders, traction encoders, steer encoders, etc. Alternatively or additionally, the sensors may include sensors to monitor inertial measurement unit (IMU) data of the material handling vehicle, such as accelerometers, gyroscopes, magnetometers, compasses etc. Further, in some examples, the sensors may include sensors to monitor visual data (e.g., images, etc.). For example, the material handling vehicle may include one or more cameras, LiDAR, etc.

In one example, the guidance, navigation, and control system may receive both odometry data and inertial measurement unit data from the sensors and process the data through a filter, such as a Kalman filter, to determine an updated location estimate for the material handling vehicle. In some examples, the system (e.g., a controller within the system) may further determine an amount of noise within each data set and utilize each of the odometry data, the inertial measurement unit data, and the noise to determine the updated location estimate for the material handling vehicle.

In another example, the location of the material handling vehicle may be estimated by processing odometry data and inertial measurement unit data through a first filter (e.g., a Kalman filter) to generate intermediate location estimates. The intermediate location estimates may then be combined and processed through a second filter (e.g., a Kalman filter) to generate a more precise location estimation of the material handling vehicles. In yet another example, the location of the material handling vehicles may be estimated using visual data (e.g., images, video, etc. of an area around the material handling vehicle) through the use of visual sensors (e.g., cameras, LiDAR, etc.).

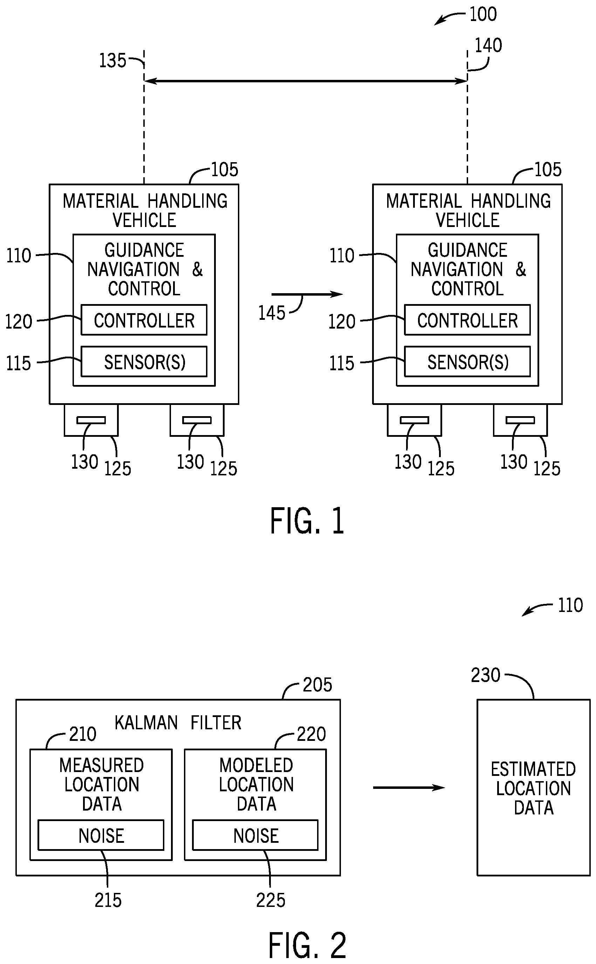

FIG. 1 illustrates an example of a warehouse 100, which may include one or more material handling vehicles 105. In one example, to facilitate organization of the warehouse 100, it may be desired to track the location (e.g., physical location) of the material handling vehicle 105 within the warehouse 100. For example, tracking the location of the material handling vehicle 105 may permit delegation from a warehouse management system (WMS) to material handing vehicles that are nearest to a pick/drop location, which may increase overall efficiency in the warehouse 100. Further, in another example, tracking the location of the material handling vehicle 105 may set a value for the maximum speed, lift height, etc. of the vehicle. For example, the maximum speed of the vehicle may be lowered in an area with high pedestrian traffic or the maximum lift height of the vehicle may be lowered in an area with little vertical clearance. In yet another example, tracking the location of a material handling vehicle may increase operator awareness of nearby vehicles within the warehouse.

In one particular example, the location of the material handling vehicle may be known as pose, which may include the X and Y coordinates of the material handling vehicle as well as the heading angle of the material handling vehicle. In other examples, it may be difficult to track the location (e.g., pose) of the material handling vehicle 105 due to sensor noise, processor requirements, large solution space, etc. However, the location of the material handling vehicle may be estimated based on the speed, acceleration, direction, or other variables (e.g., kinematic properties) of the material handling vehicle 105. For example, using dead reckoning, the past known location of the material handling vehicle 105 may be used to calculate an estimated current position of the material handling vehicle 105, based on a known movement speed, acceleration, and direction.

In some examples, the material handling vehicle 105 may include a guidance, navigation, and control system 110 to track the position (e.g., location, direction, velocity, acceleration, etc.) of the material handling vehicle 105. The guidance, navigation, and control system 110 may further permit the material handling vehicle 105 to operate autonomously (or partially autonomously) in some examples. In further examples, the guidance, navigation, and control system 110 of the material handling vehicle 105 may integrate with or exchange information with a telematics system, e.g., iWAREHOUSE^{®}, of the warehouse 100 to provide location and tracking data for the material handling vehicle 105. The guidance, navigation, and control system 110 may include a controller 120 (e.g., including a processor and a memory), which may be in communication (e.g., wired or wireless communication) with one or more first sensors 115 of the material handling vehicle 105. For example, the first sensors 115 may include inertial measurement units, gyroscopes, accelerometers, speedometers, encoders, magnetometers, cameras, LiDAR, or any other known sensor.

The material handling vehicle 105 may further include a drive system including one or more wheels 125, which may each include one or more second sensors 130. The second sensors 130 may be in the form of rotary encoders, inertial measurement units, gyroscopes, accelerometers, speedometers, magnetometers, cameras, LiDAR, or any other known sensors. Further, the second sensors 130 may be in communication with the guidance, navigation, and control system 110 (e.g., via the controller 120).

In one particular example, the guidance, navigation, and control system 110 may utilize data from the first sensors 115 and the second sensors 130 to estimate a location of the material handling vehicle 105 within the warehouse 100. For example, the guidance, navigation, and control system 110 may utilize a current (e.g., known) position 135 of the material handling vehicle 105 combined with data from the sensors 115, 130 to calculate an estimated position 140 of the material handling vehicle 105. Thus, as the material handling vehicle 105 moves (as shown by arrow 145), the guidance, navigation, and control system 110 may continuously (or intermittently) calculate the next (e.g., anticipated) position of the material handling vehicle 105. Further, this information may be supplied to a telematics system of the warehouse 100 to facilitate tracking of the material handling vehicle 105 throughout the warehouse 100.

FIG. 2 shows an example of the guidance, navigation, and control system 110, which may utilize a Kalman filter 205 (or other filter) to combine data from the sensors 115, 130 in order to provide an estimation of the location of the material handling vehicle 105. For example, the Kalman filter 205 of the guidance, navigation, and control system 110 may receive a first type of data from the first sensors 115 and a second type of data from the second sensors 130, which the filter 205 may then combine, along with noise in the data to provide an estimation of the location of the material handling vehicle 105.

In one particular example, the Kalman filter 205 may receive measured location data 210, which may correspond to inertial measurement unit data from the first sensors 115. Due to various environmental factors, the measured location data 210 from the first sensors 115 may include noise 215, which may affect the accuracy of the measurement. In addition to the measured location data 210, the Kalman filter 205 may receive modeled location data 220, which may correspond to odometry data from the second sensors 130. Due to various environmental factors, the modeled location data 220 from the second sensors 130 may include noise 225, which may affect the accuracy of the measurements. Based on the modeled location data 220 (of the location of the material handling vehicle 105) and the measured location data 210 (of the location of the material handling vehicle 105) combined with the respective noise 215, 225, the Kalman filter 205 may generate an updated estimation of the location of the material handling vehicle 105 that accounts for the noise 215, 225 within the measured location data 210 and the modeled location data 220.

Thus, in order to account for the noise 215, 225 within the measured location data 210 and the modeled location data 220, the Kalman filter 205 may be used to reduce the effects of the noise 215, 225 on the data 210, 220. Further, by combining the measured location data 210 from the first sensors 115 and the modeled location data 220 from the second sensors 130, the system 110 may have built-in redundancy. For example, if the first sensors 115 or the second sensors 130 were to lose communication with the system 110, the system 110 may still be able to estimate the location of the material handling vehicle 105 (e.g., by using the other of the first sensors 115 or the second sensors 130 remaining in communication with the system 110).

In some other examples, the measured location data 210 may correspond to odometry data from the second sensors 130, while the modeled location data 220 may correspond to inertial measurement unit data from the first sensors 115. For example, input variables into the filter 205 may include angular velocity, linear velocity, acceleration, heading angle, or any other known variables that may be measured by the sensors 115, 130.

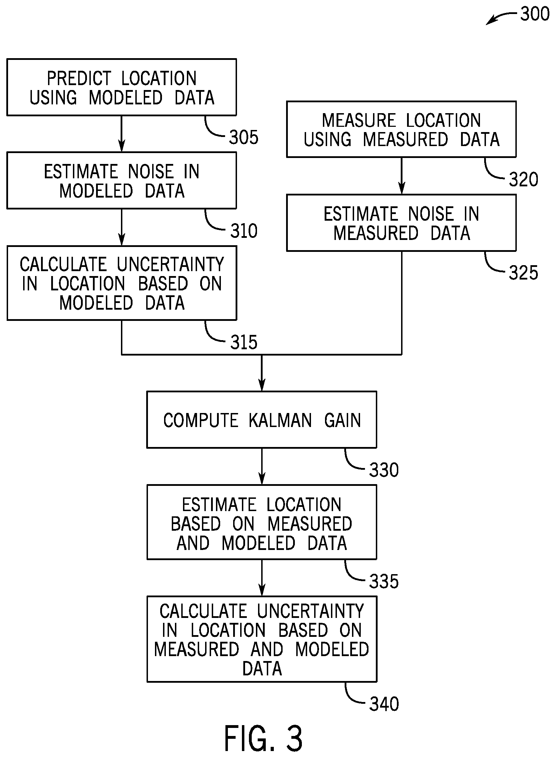

FIG. 3 illustrates a method 300 for estimating the location of the material handling vehicle 105, based on the measured location data 210 and the modeled location data 220, according to some aspects of the disclosure. The method 300 can be used with the measured location data 210 (e.g., from the first sensors 115) and the modeled location data 220 (e.g., from the second sensors 130) to calculate the estimated location data 230 of the material handling vehicle 105 within the warehouse 100, and may be particularly useful in providing a robust location estimate of the material handling vehicle 105 within the warehouse 100 versus previously-used methods. While the method 300 is described with reference to the guidance, navigation, and control system 110 of the material handling vehicle 105 discussed above, the method can also be used with other types of guidance, navigation, and control systems for a variety of uses. Additionally, operations of the method 300 need not be carried out in the specific order discussed below and, in some cases, may be implemented with other control devices and systems not explicitly described herein.

With continued reference to FIG. 3, at stage 305, the guidance, navigation, and control system 110 may predict the location of the material handling vehicle 105 using the modeled location data 220 (e.g., using a state extrapolation equation, which may be a mathematical model used in dynamic systems to predict the future state of a system based on its current state). For example, data from the second sensors 130 may be used to predict the location of the material handling vehicle 105 based on the acceleration, speed, angular velocity, or past/current location(s) of the material handling vehicle 105. In one particular example, the modeled location data 220 may use speed and steer (e.g., direction) odometry data from one or more sensors to predict the position and heading angle of the material handling vehicle 105. However, in other examples, only the first sensors 115 (e.g., and not the second sensors 120) may be used to predict the location of the material handling vehicle 105.

At stage 310, the guidance, navigation, and control system 110 may estimate the amount of noise 225 in the modeled location data 220 (e.g., within the data from the sensors 115, 130), which may be used at stage 315 to calculate an amount of uncertainty (e.g., statistical solution space for position) in the location data predicted using the modeled location data 220. In some examples, this stage may include computing a process noise covariance matrix (e.g., a mathematical representation of the uncertainty or randomness in the state transition model of a system) and then computing the state covariance extrapolation equation. At this time, the guidance, navigation, and control system 110 may determine a first calculated value for the predicted location of the material handling vehicle 105 based on the modeled location data 220.

At stage 320, the guidance, navigation, and control system 110 may measure the location of the material handling vehicle 105, which may correspond to the measured location data 210. For example, the data from the first sensors 115 may be used to measure the location of the material handling vehicle 105. In one particular example, the sensor may be a six-axis inertial measurement unit that provides accelerometer and gyroscope data used to measure the acceleration and angular velocity of the material handling vehicle 105. However, in other examples, the second sensors 130 may be used to measure the location of the material handling vehicle. Correspondingly, at stage 325, the guidance, navigation, and control system 110 may estimate the amount of noise 215 in the measured location data 210 (e.g., by computing a measurement noise covariance matrix, which may represent the uncertainty or noise associated with the measurements used in a system). At this time, the guidance, navigation, and control system 110 may determine a second calculated value for the location of the material handling vehicle 105 based on the measured location data 210, which may be independent of the first calculated value based on the modeled location data 220.

At stage 330, the guidance, navigation, and control system 110 may compute (e.g., calculate) the Kalman gain, which may be used to determine how to weigh the first calculated value or the second calculated value for the material handling vehicle 105. At stage 335, the guidance, navigation, and control system 110 may estimate the location of the material handling vehicle based on the location data 230 of the material handling vehicle 105 by combining the measured location data 210 and the modeled location data 220 within the Kalman filter 205 (e.g., via fusion of the measured location data and the modeled location data). In some examples, the data, when modified by the Kalman gain, provides a location estimate based on both the measured location data 210 and the modeled location data 220, but accounts for the noise 215, 225 within both the measured location data 210 and the modeled location data 220. Further, at stage 340, the guidance, navigation, and control system 110 may calculate the amount of noise within the guidance, navigation, and control system 110 (e.g., noise in the data from the sensors 115, 130) by incorporating the covariance matrices of the measurement and model noise.

As should be appreciated, the above method 300 may be an iterative process that continues throughout operation (e.g., manual or autonomous operation) of the material handling vehicle 105 to provide location tracking of the material handling vehicle 105.

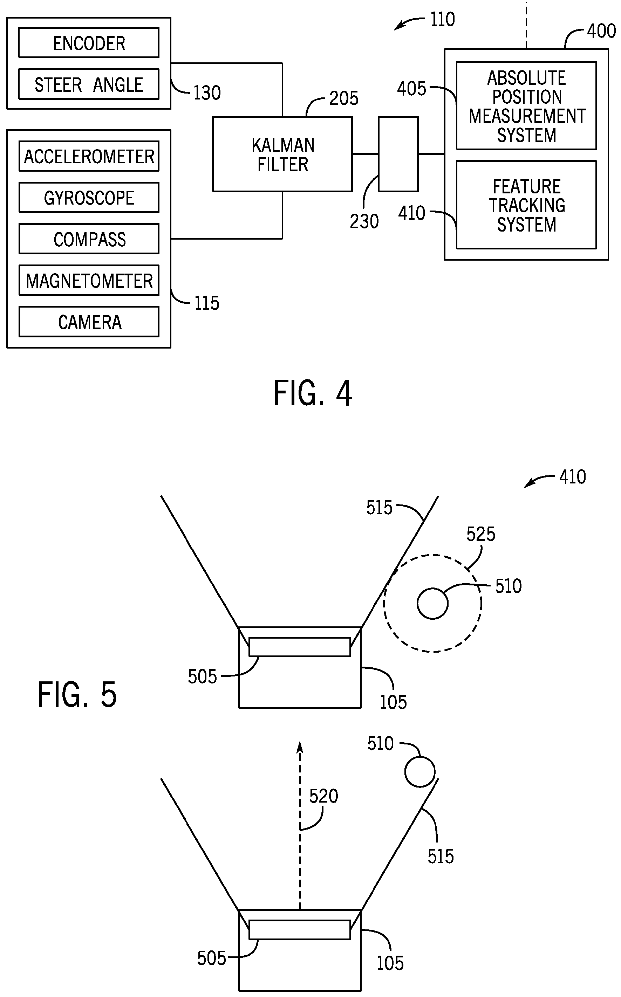

Referring now to FIG. 4, in some examples, the guidance, navigation, and control system 110 can further include one or more downstream systems 400 that utilize the estimated location data 230 to perform higher-level localization and tracking functions, such as an absolute position measurement system 405, environmental feature tracking 410, etc. For example, as mentioned previously, one or more first sensors 115 (e.g., relative position-type sensors, including accelerometers, compasses, gyroscopes, magnetometers, etc.) can output data into the Kalman filter 205. Corresponding, one or more second sensors 130 (e.g., modeled position-type sensors, including encoders, steer angle sensors, etc.) can output data into the Kalman filter 205. As mentioned previously, the Kalman filter 205 can combine data from the sensors 115, 130 and output a precise relative position estimate (e.g., the estimated location data 230).

In some examples, this more precise data (e.g., the estimated location data 230) can then be used by the one or more downstream systems 400. For example, an absolute position measurement system 405 may use the Kalman-filtered estimated location data 230 to assist in determining an absolute location of the material handling vehicle 105 within a global reference frame (e.g., a warehouse or similar facilities). In another example, a feature (e.g., object) tracking system 410 may use the Kalman-filtered estimated location data 230 to assist in determining the location of external objects (e.g., obstacles) even after the objects leave the field of view of the sensors on the material handling vehicle 105 (e.g., object permanence).

In some examples, using the estimated location data 230 (e.g., a combination of the data from sensors 115, 130) may facilitate a reduction in the possible number of solutions for a location of the material handling vehicle 105. For example, in situations where there may be multiple options for the location of the material handling vehicle (e.g., due to feature-sparse environments, sensor noise, unknown initial position, etc.), using the estimated location data 230 may reduce the number of possible locations for the material handling vehicle. In some examples, this may further facilitate a reduction in computation time (and corresponding required computation power) for the system.

Put differently, while the estimated location data 230 may reflect the movement of the material handling vehicle 105 from a prior known location, the data 230 may not, by itself, indicate the position of the material handling vehicle 105 within a larger environment (e.g., a warehouse). Thus, to address this, the absolute position measurement system 405 may include a global localization module configured to update the absolute position of the material handling vehicle 105. For example, the global localization module (e.g., within the absolute position measurement system 405) may update the absolute position of the material handling vehicle by receiving and processing the measured location data 210 (e.g., corresponding to data from the first sensors 115) and modeled location data 220 (e.g., corresponding to data from the second sensors 130) using a filter (e.g., Kalman filter 205). In one particular example, combining the measured location data 210 and the modeled location data 220 can narrow down the solution space (e.g., possible locations for the material handling vehicle 105) of the absolute position measurement system 405 where multiple possible solutions may be available (e.g., multiple candidate locations may be initially possible). In other words, incorrect options can be eliminated, which can help speed up the computation time of the absolute position measurement system 405. Further, in some examples, where the absolute position measurement system 405 operates iteratively, the refined solution space may reduce the number of required iterations and enhance computational efficiency.

FIG. 5 illustrates an example of the feature tracking system 410 (e.g., an object permanence system), which may be configured to detect and remember the location of objects within a warehouse (e.g., even when outside of a field of view of a sensor). **In** some examples, the material handling vehicle 105 may include a sensor 505 (e.g., a third sensor, such as a camera, etc.), with a predetermined field of view 515. **In** some examples, as the material handling vehicle 105 travels throughout the warehouse 100, objects (e.g., object 510) may pass into and out of the field of view 515 of the sensor 505. However, in some examples, with prior systems, objects outside of the field of view 515 of the sensor 505 may not be recognized by the material handling vehicle 105, which may be undesirable.

However, using the feature tracking system 410, the material handling vehicle 105 may be able to track and remember the location of objects 510 that are outside of the field of view 515 of the sensor 505 (permitted the object 510 was previously within the field of view 515 of the sensor 505). In some examples, as the material handling vehicle 105 moves in the direction shown by arrow 520, an object 510 may be initially detected within the field of view 515 of the sensor 505. However, as the material handling vehicle 105 continues to travel, the object 510 may pass outside of the field of view 515 of the sensor 505. However, the feature tracking system 410 may record the position (e.g., location) of the previously-detected object 510 (e.g., an obstacle, environmental feature, etc.) relative to the position of the material handling vehicle 105 when the external object 415 is initially detected.

Thus, as the material handling vehicle 105 continues to advance in the direction shown by arrow 520, a position estimate of the object 510 can be generated based on the known movement of the material handling vehicle 105 (e.g., from the measured location data 210 and modeled location data 220). In use, the feature tracking system 410 can utilize the estimated location data 230 to continuously update an estimated location of the previously-detected object 510, even when the object 510 is no longer within the field of the view 515 of the sensor 505. In some examples, the feature tracking system 410 may artificially increase a size of the object 510 (e.g., create a buffer zone 525) around the object 510 to account for positional uncertainty that accrues while the object 510 is not directly detected by the sensor.

**In** some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

### FURTHER EXAMPLES

Example 1. A method of tracking a material handling vehicle, the method comprising: estimating a location of the material handling vehicle based on modeled location data from a first sensor configured to model an odometry of the vehicle; measuring the location of the material handling vehicle based on measured location data from a second sensor configured to measure a relative motion of the vehicle; determining an amount of noise in both the modeled location data from the first sensor and the measured location data from the second sensor; and updating the estimated location of the material handling vehicle based on the location data from the first sensor, the second sensor, and the amount of noise.

Example 2. The method of Example **1,** wherein the modeled location data is based on odometry data of the material handling vehicle.

Example 3. The method of Example 1 or Example 2, wherein the measured location data is based on inertial measurement unit data of the material handling vehicle.

Example 4. The method of any one of Examples 1 to 3, wherein updating the estimated location of the material handling vehicle includes: combining the modeled location data from the first sensor and the measured location data from the second sensor within a Kalman filter.

Example 5. The method of any one of Examples 1 to 4, further comprising: using the updated estimated location of the material handling vehicle to track the location of objects outside a field of view of a visual sensor of the material handling vehicle.

Example 6. The method of Example 5, further comprising: creating a buffer zone around the tracked objects to prevent the material handling vehicle from contact with the tracked objects.

Example 7. The method of any one of Examples 1 to 6, further comprising: adjusting at least one operational parameter of the material handling vehicle based on the estimated location of the material handling vehicle.

Example 8. The method of Example 7, wherein the operational parameter includes at least one of a maximum speed, a maximum lift height, or a maximum acceleration.

Example 9. A guidance, navigation, and control system for a material handling vehicle, the system comprising: a first sensor, the first sensor to measure odometry data; a second sensor, the second sensor to measure inertial measurement unit data; and a processor, the processor to: predict a location of the material handling vehicle based on the odometry data from the first sensor; measure the location of the material handling vehicle based on the inertial measurement unit data from the second sensor; and combine the odometry data from the first sensor and the inertial measurement unit data from the second sensor within a Kalman filter to generate an updated location estimate for the material handling vehicle.

Example 10. The system of Example 9, wherein the processor calculates an amount of noise in both the measured odometry data and the measured inertial measurement unit data.

Example 11. The system of Example 10, wherein the updated location estimate for the material handling vehicle is based on the odometry data from the first sensor, the inertial measurement unit data from the second sensor, and the noise in both the measured odometry data and the measured inertial measurement unit data.

Example 12. The system of any one of Examples 9 to 11, further comprising: a feature tracking system configured to track locations of objects outside a field of view of a sensor based on the updated location estimate of the material handling vehicle.

Example 13. The system of Example 12, wherein the feature tracking system is configured to create a buffer zone around tracked objects to account for potential offsets in the updated location estimate.

Example 14. The system of any one of Examples 9 to 13, further comprising: an absolute position measurement system configured to determine an absolute position of the material handling vehicle within a warehouse based on the updated location estimate.

Example 15. The system of any one of Examples 9 to 14, wherein the processor is further configured to adjust operational parameters of the material handling vehicle based on the updated location estimate, wherein the operational parameters include at least one of maximum speed, lift height, or turning radius.

Example 16. The system of any one of Examples 9 to 15, wherein the processor is further configured to communicate the updated location estimate to a warehouse management system to facilitate tracking of the material handling vehicle throughout a warehouse.

Example 17. A method of using a guidance, navigation, and control system for a material handling vehicle to track objects, the method comprising: estimating a location of the material handling vehicle using a Kalman filter to combine measured location data from a first sensor and modeled location data from a second sensor; detecting an object within a field of view of a third sensor on the material handling vehicle; recording a position of the detected object relative to the estimated location of the material handling vehicle; and updating an estimated location of the detected object based on subsequent estimated locations of the material handling vehicle, even when the object is no longer within the field of view of the sensor.

Example 18. The method of Example 17, further comprising: communicating the estimated location of the detected object to a warehouse management system to facilitate tracking of obstacles within a warehouse environment.

Example 19. The method of Example 17 or Example 18, further comprising: creating a buffer zone around the estimated location of the object; and preventing the material handling vehicle from entering the buffer zone.

Example 20. The method of Example 19, wherein a size of the buffer zone is increased over time to account for potential offsets in the estimated location of the material handling vehicle.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In some examples, aspects of the disclosed technology, including computerized implementations of methods according to the disclosed technology, can be implemented as a system, method, apparatus, or article of manufacture using standard programming or engineering techniques to produce software, firmware, hardware, or any combination thereof to control a processor device (e.g., a serial or parallel general purpose or specialized processor chip, a single-or multi-core chip, a microprocessor, a field programmable gate array, any variety of combinations of a control unit, arithmetic logic unit, and processor register, and so on), a computer (e.g., a processor device operatively coupled to a memory), or another electronically operated controller to implement aspects detailed herein. Accordingly, for example, aspects of the disclosed technology can be implemented as a set of instructions, tangibly embodied on a non-transitory computer-readable media, such that a processor device can implement the instructions based upon reading the instructions from the computer-readable media. Some examples of the disclosed technology can include (or utilize) a control device such as an automation device, a special purpose or general purpose computer including various computer hardware, software, firmware, and so on, consistent with the discussion below. As specific examples, a control device can include a processor, a microcontroller, a field-programmable gate array, a programmable logic controller, logic gates etc., and other typical components that are known in the art for implementation of appropriate functionality (e.g., memory, communication systems, power sources, user interfaces and other inputs, etc.). **In** some examples, a control device can include a centralized hub controller that receives, processes and (re)transmits control signals and other data to and from other distributed control devices (e.g., an engine controller, an implement controller, a drive controller, etc.), including as part of a hub-and-spoke architecture or otherwise.

The term "article of manufacture" as used herein is intended to encompass a computer program accessible from any computer-readable device, carrier (e.g., non-transitory signals), or media (e.g., non-transitory media). For example, computer-readable media can include but are not limited to magnetic storage devices (e.g., hard disk, floppy disk, magnetic strips, and so on), optical disks (e.g., compact disk (CD), digital versatile disk (DVD), and so on), smart cards, and flash memory devices (e.g., card, stick, and so on). Additionally, it should be appreciated that a carrier wave can be employed to carry computer-readable electronic data such as those used in transmitting and receiving electronic mail or in accessing a network such as the Internet or a local area network (LAN). Those skilled in the art will recognize that many modifications may be made to these configurations without departing from the scope or spirit of the claimed subject matter.

Certain operations of methods according to the disclosed technology, or of systems executing those methods, may be represented schematically in the FIGS., or otherwise discussed herein. Unless otherwise specified or limited, representation in the FIGS. of particular operations in particular spatial order may not necessarily require those operations to be executed in a particular sequence corresponding to the particular spatial order. Correspondingly, certain operations represented in the FIGS., or otherwise disclosed herein, can be executed in different orders than are expressly illustrated or described, as appropriate for particular examples of the disclosed technology. Further, in some examples, certain operations can be executed in parallel, including by dedicated parallel processing devices, or separate computing devices configured to interoperate as part of a large system.

As used herein in the context of computer implementation, unless otherwise specified or limited, the terms "component," "system," "module," "block," "device," and the like are intended to encompass part or all of computer-related systems that include hardware, software, a combination of hardware and software, or software in execution. For example, a component may be, but is not limited to being, a processor device, a process being executed (or executable) by a processor device, an object, an executable, a thread of execution, a computer program, or a computer. By way of illustration, both an application running on a computer and the computer can be a component. One or more components (or system, module, and so on) may reside within a process or thread of execution, may be localized on one computer, may be distributed between two or more computers or other processor devices, or may be included within another component (or system, module, and so on).

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

Additionally, unless otherwise specified or limited, the terms "about" and "approximately," as used herein with respect to a reference value, refer to variations from the reference value of plus or minus 15 percent or less, inclusive of the endpoints of the range. Similarly, the term "substantially equal" (and the like) as used herein with respect to a reference value refers to variations from the reference value of less than plus or minus 30 percent, inclusive. Where specified, "substantially" can indicate in particular a variation in one numerical direction relative to a reference value. For example, "substantially less" than a reference value (and the like) indicates a value that is reduced from the reference value by 30 percent or more, and "substantially more" than a reference value (and the like) indicates a value that is increased from the reference value by 30 percent or more.

The previous description of the disclosed embodiments is provided to enable any person skilled in the art to make or use the invention. Given the benefit of this disclosure, various modifications to these embodiments will be readily apparent to those skilled in the art, and the principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A method (300) of tracking a material handling vehicle (105), the method (300) comprising:
estimating a location of the material handling vehicle (105) based on modeled location data (220) from a first sensor (115) configured to model an odometry of the vehicle (105);
measuring the location of the material handling vehicle (105) based on measured location data (210) from a second sensor (130) configured to measure a relative motion of the vehicle (105);
determining an amount of noise (215, 225) in both the modeled location data (220) from the first sensor (115) and the measured location data (210) from the second sensor (130); and
updating the estimated location of the material handling vehicle (105) based on the location data from the first sensor (115), the second sensor (130), and the amount of noise (215, 225).

2. The method (300) of claim 1, wherein the modeled location data (220) is based on odometry data of the material handling vehicle (105).

3. The method (300) of claim 1 or 2, wherein the measured location data (210) is based on inertial measurement unit data of the material handling vehicle (105).

4. The method (300) of any of the claims 1 to 3, wherein updating the estimated location of the material handling vehicle (105) includes:
combining the modeled location data (220) from the first sensor (115) and the measured location data (210) from the second sensor (130) within a Kalman filter (205).

5. The method (300) of any of the claims above, further comprising:
using the updated estimated location of the material handling vehicle (105) to track the location of objects (510) outside a field of view (515) of a visual sensor (505) of the material handling vehicle (105).

6. The method (300) of claim 5, further comprising:
creating a buffer zone (525) around the tracked objects to prevent the material handling vehicle (105) from colliding with the tracked objects (510).

7. The method (300) of any of the claims above, further comprising:
adjusting at least one operational parameter of the material handling vehicle (105) based on the estimated location of the material handling vehicle (105).

8. The method (300) of claim 7, wherein the operational parameter includes at least one of a maximum speed, a maximum lift height, or a maximum acceleration.

9. A guidance, navigation, and control system (110) for a material handling vehicle (105), the system (110) comprising:
a first sensor (115), the first sensor to measure odometry data;
a second sensor (130), the second sensor (130) to measure inertial measurement unit data; and
a processor, the processor to:
predict a location of the material handling vehicle (105) based on the odometry data from the first sensor;
measure the location of the material handling vehicle (105) based on the inertial measurement unit data from the second sensor (130); and
combine the odometry data from the first sensor (115) and the inertial measurement unit data from the second sensor (130) within a Kalman filter (205) to generate an updated location estimate for the material handling vehicle (105).

10. The system of claim 9, wherein the processor calculates an amount of noise (215, 225) in both the measured odometry data and the measured inertial measurement unit data.

11. The system of claim 10, wherein the updated location estimate for the material handling vehicle (105) is based on the odometry data from the first sensor (115), the inertial measurement unit data from the second sensor (130), and the noise (215, 225) in both the measured odometry data and the measured inertial measurement unit data.

12. The system of any of the claims 9 to 11, further comprising:
a feature tracking system (410) configured to track locations of objects (510) outside a field of view (515) of a sensor (505) based on the updated location estimate of the material handling vehicle (105).

13. The system of claim 12, wherein the feature tracking system (410) is configured to create a buffer zone (525) around tracked objects (510) to account for potential offsets in the updated location estimate.

14. The system of any of the claims 9 to 13, further comprising:
an absolute position measurement system (405) configured to determine an absolute position of the material handling vehicle (105) within a warehouse (100) based on the updated location estimate.

15. The system of any of the claims 9 to 14, wherein the processor is further configured to adjust operational parameters of the material handling vehicle (105) based on the updated location estimate, wherein the operational parameters include at least one of maximum speed, lift height, or turning radius.
